(19) Europäisches Patentamt
European Patent Office
Office européen des brevets

(11) EP 2 827 294 A1

(12) EUROPEAN PATENT APPLICATION

(43) Date of publication:
21.01.2015 Bulletin 2015/04

(51) Int Cl.:
G06Q 30/02 (2012.01)

(21) Application number: 14177806.8

(22) Date of filing: 21.07.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 19.07.2013  US 201361856556 P
31.03.2014  US 201461973168 P

(71) Applicant: A6 Corporation
Seattle, WA 98104 (US)

(72) Inventors:
• Henrichsen, Christopher
Seattle, WA 98104 (US)
• Roubicek, Ben
Seattle, WA 98104 (US)
• Branch, Frank
Seattle, WA 98104 (US)

(74) Representative: Tranter, Andrew David
Barker Brettell LLP
100 Hagley Road
Edgbaston
Birmingham B16 8QQ (GB)

(54) **Systems and method for determining influence of entities with respect to contexts**

(57)  Systems, methods, and computer-readable media are provided that help advertisers identify and bid for valuable display advertising impressions made available through advertising exchanges. An influence determination system builds an influence graph that includes representations of entities that make advertising impressions available and interactions between such entities. The influence determination system determines contexts relevant to the entities, and applies context labels to entities in the influence graph as appropriate. The influence determination system calculates and stores context-sensitive influence scores for entities in the influence graph. The context labels and context-sensitive influence scores may be used by advertisers to choose advertising impressions on which bids will be placed.

*200*

ADVERTISING PUBLISHER(S) *202*

ADVERTISING EXCHANGE *204*

ENTITY INFLUENCE SYSTEM *206*

ADVERTISER *208*

*FIG. 2*

EP 2 827 294 A1

**Description**

CROSS-REFERENCES TO RELATED APPLICATIONS

This application claims the benefit of U.S. Provisional No. 61/856556, filed July 19, 2013, and U.S. Provisional No. 61/973168, filed March 31, 2014, the entire disclosures of which are hereby incorporated by reference herein for all purposes.

BACKGROUND

One model used on the World Wide Web for distributing advertising content is the use of advertising exchanges. In such a model, advertising publishers such as web sites notify an advertising exchange that they have a given number of advertising impressions available. That is, the advertising publisher is offering to show a display advertisement to its users a given number of times. The advertising exchange accepts bids from advertisers for the impressions, and once a winning bid from a given advertiser is determined, the advertising exchange provides an advertisement from the given advertiser to the advertising publisher for presentation to users.

As seen from the point of view of display advertising exchanges, the concept of the Web as a highly interconnected network breaks down. Advertising publishers that use advertising exchanges to obtain advertising for display are generally considered sub-premium or remnant, and are more like a set of isolated islands than a highly connected spider web. "Link utility" is a measure of a number of incoming links to an advertising publisher. A study of the link utility of advertising publishers using AppNexus, the largest online display advertising exchange in the world, showed that 2% of all advertising publishers had an optimal link utility (more than 8 incoming links), 10% of all advertising publishers had a suboptimal link utility (from 2 to 8 incoming links), and 88% of all advertising publishers had a useless link utility (less than 2 incoming links). In fact, over 55% of all advertising publishers using AppNexus had no connections at all to other domains anywhere on the Web, and there was a steep exponential trend toward zero for the connectedness of the rest of the advertising publishers.

An advertiser placing a display ad with a random advertising publisher in the exchange has a very low probability of the ad being seen by users because so few of the pages are connected to other domains. Advertising technology that provides targeting based purely on the subject matter associated with the advertising publisher (contextual targeting) will be equally ineffective at capturing users because that technology does not measure the likelihood of an advertising publisher being reached via natural Web surfing behavior (i.e., visiting a page, and then following links from that page to other pages). Instead, contextual targeting alone only measures the value of keywords in describing the content provided by the advertising publisher.

The formation of these information islands has a profound effect on advertisers' ability to target ads to a valuable audience of users. Traditional methods for determining the value of advertising publishers and the impressions they make available do not work well in this environment. Such methods for assigning value rely on factors such as interconnectedness, past impressions, or click-through rates. However, interconnectedness is low for these types of advertising publishers, and so is not likely to result in an accurate indication of value. Past impressions and click-through rates are likely to be manipulated by click bots or other methods of search engine optimization (SEO) inflation as opposed to actual traffic.

Calculating an accurate value for advertising impressions provided by these advertising publishers, referred to herein as "influence," presents numerous challenges. For example, the number of entities and interactions to be considered in calculating influence, such as entities and interactions on the internet, is growing rapidly. Also, interactions may involve multiple entity types and channels. A web page (a first entity on a first channel) may inspire a user (a second entity) to create a social media posting (a third entity) on a first social media platform (a second channel) referencing the web page, and may inspire another user (a fourth entity) to create a share (a fifth entity) of the web page on a second social media platform (a third channel). Considering context may also be important, because influence for an entity in one context doesn't necessarily extend to another context. For example, a social media account associated with a pop music star may be very influential in pop culture related contexts, while it may have little influence in unrelated contexts (such as contexts related to higher education or scientific research). Multiple types of contexts exist, new contexts frequently appear, and many contexts may best be represented as multi-level taxonomies.

What is needed are systems and methods that allow a meaningful determination of value for advertising publishers in these information islands to be provided to advertisers, in order to allow advertisers to accurately predict which advertising impressions being offered are most likely to lead to conversions.

SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

In some embodiments, a system for identifying contexts associated with entities using a supervised learning process is provided. The system comprises at least one computing device configured to provide an example data store, a management interface engine, a training engine, and a classification engine. The example data store is configured to store training examples, wherein each training example includes one or more contexts assigned to an entity. The management interface engine is configured to present an interface for managing the supervised learning process. The training engine is configured to build one or more classification models based on training examples stored in the example data store. The classification engine is configured to identify contexts associated with entities using the one or more classification models built by the training engine.

In some embodiments, a computer-implemented method of predicting contexts associated with entities is provided. A computing device applies a plurality of classification models to an entity. Each classification model of the plurality of classification models is associated with a separate context, and the output of each classification model is a context probability indicating a probability that the entity is associated with the context of the classification model. A computing device chooses a context associated with a highest context probability. A computing device stores a context label associated with the entity, wherein the context label identifies the context associated with the highest context probability and includes the context probability of the context. In response to determining that the context probability of the context is less than a probability threshold and that uncertainty of a context distribution is greater than an uncertainty threshold, a computing device stores an indication in the context label that the classification is a low confidence classification.

In some embodiments, a computer-readable medium having computer-executable instructions stored thereon is provided. The instructions, in response to execution by one or more processors of one or more computing devices, cause the one or more computing devices to determine influence of an entity by generating an interaction graph and calculating Eigenvector centrality for the graph to determine influence scores for each vertex. Vertices in the graph represent entities. The vertices include weighted attributes indicating associated contexts, and directed edges in the graph represent interactions between entities.

DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:

FIGURE 1 is a schematic drawing illustrating an exemplary embodiment of an influence graph according to various aspects of the present disclosure;

FIGURE 2 is a block diagram that illustrates, at a high level, an exemplary environment for providing context and influence-based advertising content according to various aspects of the present disclosure;

FIGURE 3 is a flowchart that illustrates an exemplary embodiment of a method of providing valuable advertising placements to advertisers according to various aspects of the present disclosure;

FIGURE 4 is a block diagram that illustrates an exemplary system for building influence graphs and determining influence according to various aspects of the present disclosure;

FIGURES 5A-5D are a flowchart that illustrates an exemplary embodiment of a method of determining influence of entities with respect to contexts according to various aspects of the present disclosure;

FIGURE 6 is a flowchart that illustrates an exemplary embodiment of a procedure for collecting entities identified by an advertising exchange according to various aspects of the present disclosure;

FIGURE 7 is a flowchart that illustrates an exemplary embodiment of a procedure for collecting entities from a social media platform according to various aspects of the present disclosure; and

FIGURE 8 is a block diagram that illustrates aspects of an exemplary computing device appropriate for use with embodiments of the present disclosure.

DETAILED DESCRIPTION

Embodiments of the present disclosure are operable to predict influence of an entity with respect to a context. A context-relevant influence score determined by embodiments of the present disclosure is broadly useful and can be used as a quality filter, to target advertisement, to illuminate market trends, or for any other suitable purpose. The present disclosure includes methods and systems for calculating influence that scale efficiently and can be extended to support arbitrary types of entities, contexts, interactions, and channels.

As used herein, an entity is something that can affect attitudes or actions. For example, a person, a business, and/or the like may be an entity. However, the term "entity" is not limited to actors such as people or businesses. Non-acting entities, such as a web page or domain, a social media account, and/or the like may also be considered "entities" as used herein. As used herein, "content" is a type of entity that includes a presentation of information. For example, "content" may include but is not limited to a web page, a blog post, a tweet, a timeline post, and/or the like. A "content" entity may be associated with an "author" entity. For example, a social media account (a first entity) may create a timeline post (a second, "content" entity). As used herein, a "channel" is a medium through which entities interact, such as a particular social media platform, a Web-based communication platform, general Web pages, and/or the like.

As used herein, "influence" is a strength of an effect applied by an entity in one or more contexts. "Influence" may also be used as an indication of how valuable advertising impressions associated with the entity would be in one or more contexts. As used herein, a "context" is an attribute associated with one or more entities and/or interactions. As used herein, an "interaction" is an event that implies influence. In some embodiments, a "context" may indicate a category into which content can be organized, including but not limited to a subject area category or "realm," a geographical region, a top-level domain, and/or the like.

As a simple example of the use of the above terms, a sports-related blog hosted at a given domain may publish a post about a player signing a new contract. A reader of the blog may use their Twitter account to tweet a link to the blog post. A follower of the reader on Twitter may then re-tweet the reader's tweet. In this example, the blog, the domain, the reader's Twitter account, the tweet, the follower's Twitter account, and the retweet would each be an entity. The blog and the tweet would each be content. The blog references the domain, and so there would be an interaction from the blog to the domain. The tweet references the blog, so there would be an interaction from the tweet to the blog. The reader wrote the tweet, so there would be an interaction from the reader to the tweet. The re-tweet mentions the tweet, so there would be an interaction from the re-tweet to the tweet. Finally, the follower created the re-tweet, so there would be an interaction from the follower to the re-tweet. Each of the entities may be tagged with one or more contexts, such as a general "sports" context, a context associated with the player, a context associated with the player's new team, and/or the like. Influence may be determined by analyzing the interactions between the entities with respect to given contexts.

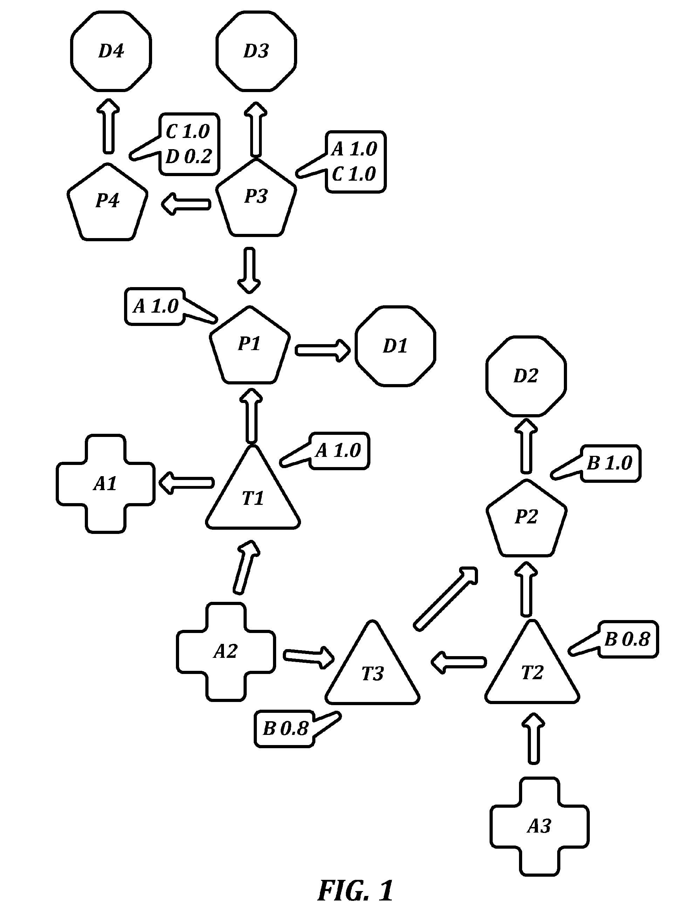

This simple example is provided to illustrate exemplary uses of the terminology used herein. A more detailed, though still simplified, example of an influence graph is illustrated in FIGURE 1. In some embodiments such as the one illustrated in FIGURE 1, the influence graph is modeled as a directed cyclic graph. Edges in the graph are directed edges that represent interactions between a source entity and a sink entity. The illustrated influence graph includes four different types of entities: web pages (represented by pentagons), social media posts (such as tweets, represented by triangles), social media accounts (such as Twitter accounts, represented by plus shapes), and domains (represented by octagons). Interactions between the entities are indicated by arrows, and context labels are indicated by callouts.

The illustrated influence graph shows several typical graph topologies. For example, web page P3 links to two other pages (P4 and P1), and so the graph includes interactions with each web page from web page P3. Each of the web pages P1, P2, P3, P4 is hosted by a separate domain D1, D2, D3, D4. Accordingly, each web page P1, P2, P3, P4 has an interaction to its associated domain.

Tweet T2 is a simple example of a tweet posted by Twitter account A3 that mentions web page P2. Accordingly, there is an interaction from Twitter account A3 to tweet T2, and an interaction from tweet T2 to web page P2. Tweet T1 is somewhat more complex. Tweet T1 was posted by Twitter account A2, and so there is an interaction from Twitter account A2 to tweet T1. The tweet T1 mentions Twitter account A1 and web page P1. Accordingly, one interaction goes from tweet T1 to Twitter account A1, and one interaction goes from tweet T1 to web page P1.

Tweet T3 is an example of a retweet of tweet T2 posted by Twitter account A2. Because Twitter account A2 posted the retweet, there is an interaction from Twitter account A2 to tweet T3. Because tweet T3 references tweet T2, there is an interaction from tweet T2 to tweet T3. Also, because the content of tweet T3 references web page P2, there is an interaction from tweet T3 to web page P2.

The illustrated graph also includes context annotations. Some entities, such as tweet T3, web page P2, tweet T2, and so on, have been tagged with a single context, while other entities, such as web page P4 and web page P3, have been tagged with multiple contexts. One of ordinary skill in the art will recognize that the context probabilities illustrated in FIGURE 1 are merely examples and do not reflect actual values calculated for the illustrated influence graph.

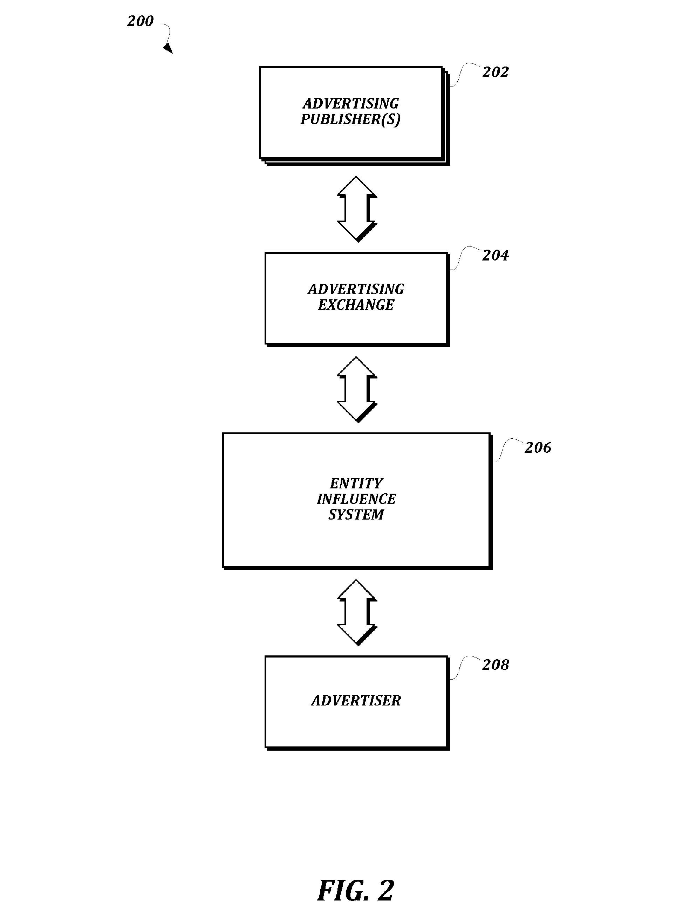

FIGURE 2 is a block diagram that illustrates, at a high level, an exemplary environment for providing context and influence-based advertising content according to various aspects of the present disclosure. The environment 200 includes one or more advertising publishers 202, an advertising exchange 204, an entity influence system 206, and an advertiser 208. As will be understood by one of ordinary skill in the art, the elements present in the environment 200 may communicate with each other over any type of network (or combination of networks) using any combination of suitable technologies, including but not limited to one or more of the Internet, a local area network, a wide area network, a leased line, a wireless telephony network, a WiFi network, and/or the like.

The advertising publishers 202 are entities that present advertising to users. Some non-limiting examples of advertising publishers 202 include web sites, web logs, and/or the like. The advertiser 208 is any type of business or individual that produces advertising for distribution. Some non-limiting examples of advertisers 208 include product manufacturers, retail stores, movie distributors, and/or the like. The advertising exchange 204 accepts indications of available advertising impressions from advertising publishers 202, and matches them to bids for advertising impressions. One non-limiting example of an advertising exchange 204 is the AppNexus Platform operated by AppNexus Inc. In some embodiments, advertising exchanges 204 other than AppNexus may be used, and in some embodiments, more than one advertising exchange 204 may be present in the environment 200. The entity influence system 206 determines influence and contexts for advertising publishers 202, and uses these determinations to help advertisers 208 place their advertisements with particularly valuable advertising publishers 202. The content and operation of the entity influence system 206 is described in further detail below.

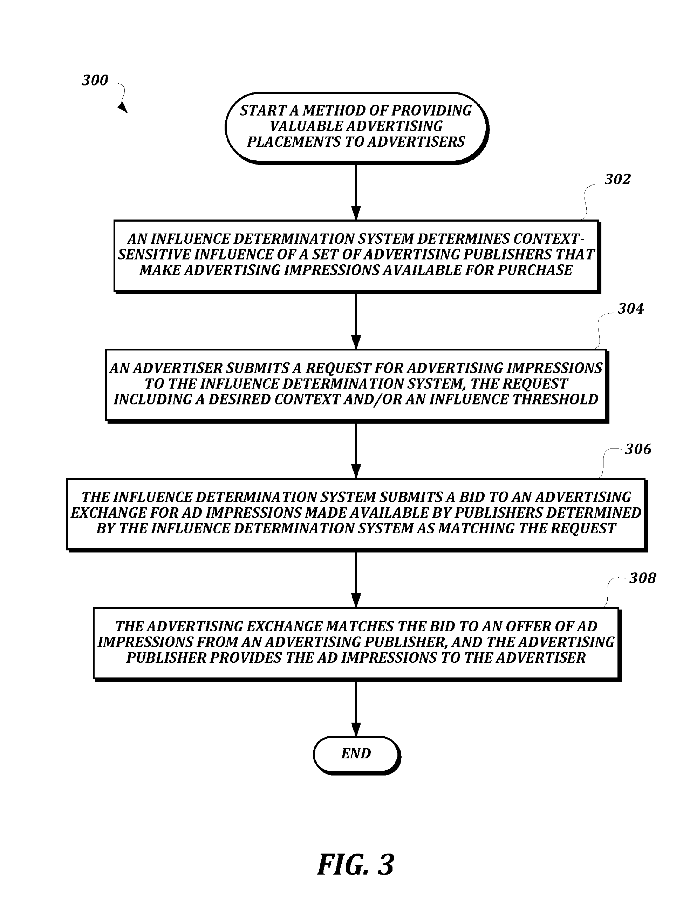

FIGURE 3 is a flowchart that illustrates an exemplary embodiment of a method 300 of providing valuable advertising placements to advertisers according to various aspects of the present disclosure. The method 300 as illustrated in FIGURE 3 is an overview, and further details of various portions of the method 300 are provided further below.

From a start block, the method 300 proceeds to block 302, where an entity influence system 206 determines context-sensitive influence of a set of advertising publishers 202 that make advertising impressions available for purchase. The advertising publishers 202 inform the advertising exchange 204 that a given number of ad impressions are available in association with a given URI. The advertising exchange 204 adds the ad impressions to its inventory, and also provides the URI to the entity influence system 206. The entity influence system 206 uses the URI to create an entity in an influence graph, and analyzes the graph to tag the entity with one or more contexts and to determine influence scores for the entity in one or more contexts. Further details of the creation of the influence graph and determination of contexts and influence scores are discussed further below.

At block 304, an advertiser 208 submits a request for advertising impressions to the entity influence system 206, the request including a desired context and/or an influence threshold. The advertiser 208 may also specify other aspects of the desired advertising impressions, including but not limited to a bid price that indicates a maximum amount they are willing to pay per impression, geolocation information of a location where the advertising impressions will be presented, cookie-based targeting information, and/or the like, to facilitate matching the request with a desired advertising impression being offered. Next, at block 306, the entity influence system 206 submits a bid to an advertising exchange 204 for ad impressions made available by advertising publishers 202 determined by the entity influence system 206 as matching the request. The entity influence system 206 uses the influence graph to find entities associated with advertising publishers 202 that meet the context and influence score threshold requirements indicated by the advertiser 208.

Once one or more matching entities are determined by the entity influence system 206, the entity influence system 206 communicates with the advertising exchange 204 to place bids on impressions being offered by the matching entities. At block 308, the advertising exchange 204 matches the bid to an offer of advertising impressions from an advertising publisher 202, and the advertising publisher 202 provides the ad impressions to the advertiser 208 for display of the advertiser's 208 advertising content to users. The method 200 then proceeds to an end block and terminates.

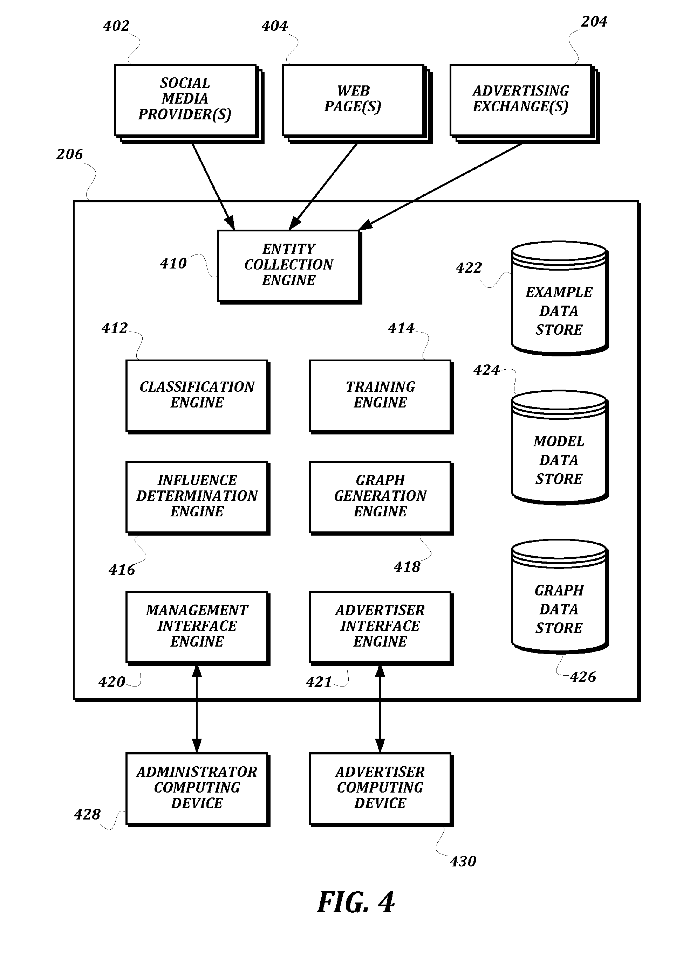

FIGURE 4 is a block diagram that illustrates an exemplary system for building influence graphs and determining influence according to various aspects of the present disclosure. The entity influence system 206 illustrated in FIGURE 4 is suitable for use as the entity influence system 206 in the environment 200 described above.

In some embodiments, the entity influence system 206 is generally configured to determine influence by mimicking browsing behavior of actual internet users. Though there are several different types of information-seeking behavior found among internet users, browsing behavior (e.g., following links from one page to another page, also referred to as "berrypicking" or "web surfing") has been found to be the most effective for predicting user receptiveness to explore content of any kind (including display advertising). Berrypickers spend more time clicking through menu options, explore 24% more content on a given page, and are more likely to click to the next link than are people who are searching for specific topics via traditional search engines. Therefore, the availability of connected paths between entities can be very important in determining the likelihood of future page visits, even more so than pages listed highly in search engines due to SEO techniques.

Accordingly, some embodiments of the entity influence system 206 determine the influence of each entity in an influence graph by starting at a given entity, and then traversing a randomly selected outbound link from the given entity to a new entity. The entity influence system 206 weighs each inbound link based on the link density of the linking entity, and the entities that link to the linking entity in an iterative process using Markov chain mathematics. This random wandering mimics the behavior of berrypickers, and will even include circular references that could be explored by a real user. Every entity in the influence graph is assigned an influence score, and highly visited entities with large numbers of visits through such berrypicking receive the highest influence scores.

Though other ranking algorithms used by search engines may also use Markov chain mathematics, there are several differences in embodiments of the present disclosure that allow the influence determination system 206 to better measure a page's ability to be berrypicked and to increase resistance to fraud from click bots and content farms. For example, the influence score determined by the influence determination system 206 for an entity is non-deterministic. The randomness used by this methodology mimics what a collection of real web users browsing the internet would do, who randomly move from page to page based on a variety of factors (as opposed to topical relevance). An entity has a similar probability of being visited multiple times by the influence determination process as it does in real life by real users browsing the internet. In contrast, conventional page rank algorithms visit every nearest neighbor only once in order to infer the strength of keyword relevance of specific pages. For this reason, page rank algorithms may measure the ability to find pages via keyword search, but perform poorly at measuring true browsing behavior. The use of randomness also insulates the influence determination from fraud because it cannot be reliably predicted in advance. Conventional page rank algorithms, meanwhile, produce the same page rankings given the same inputs, and so SEO techniques can be used to game the system and inflate rankings.

As another example of a difference provided by embodiments of the present disclosure versus conventional algorithms, the influence score takes into account not just links into and out of an entity, but also the degree to which social media links to an entity. Social media traffic tends to be more dynamic than links between web pages, and is also highly likely to be generated by interested users. Page links, on the other hand, are usually created by page authors, who may simply be hoping to increase their page rank score.

As yet another example of a difference, some embodiments of the present disclosure use supervised training in order to create classifier models for tagging entities with contexts. The use of human input in identifying training examples is beneficial because the human trainer is observing the page in a similar way as a berrypicker explores concepts on a page. For example, a human trainer seeking training examples for pages about "pets" is more likely to get a capture of a pattern of features that is subconsciously salient to berrypickers seeking information about pets, because those pages were selected based on the trainer's response to all pet-related stimuli on the page and not just keywords. Further, human training is resistant to SEO gaming techniques like hidden terms of other artificial keyword positioning, because the human trainer will not be fooled by such additions in the way a formula that relies solely on the presence of keywords could.

One more example of a beneficial difference provided by embodiments of the present disclosure is that the influence determination method naturally selects out pages of negative value to advertisers. A low influence score indicates that a page or other entity is not likely to be visited by human users or referenced in social media, even if click bots have been used to drive up traffic to an entity. In search-based advertising, a low page rank simply indicates low relevance, and no money is lost to an advertiser because the page will not be returned in a search. Meanwhile, in display advertising, a low influence score can indicate malicious junk content or fraudulent content, which, if advertising impressions were provided for the content, the advertiser would lose value from ads being presented to fraudulent users. Since most clicks tracked through advertising exchanges (as many as 99.55%) are generated by click bots and are therefore worthless, the importance of being able to filter out these fraudulent clicks and content is considerable.

The benefits of using the methods for determining influence and assigning contexts described herein for choosing where to place display advertising through advertising exchanges are significant. In testing campaigns performed by the applicant, advertising impression inventory selected using the methods described herein had a 42.27% click conversion rate. This is in comparison to a 0.19% click conversion rate for the same campaigns run at the same time using Google's Display Network ("GDN"), which is likely due to GDN's inability to ignore fraudulent clicks as the present disclosure can. The cost of conversions (that is, the cost of acquiring a customer) was 5.5 times better using the methods described herein versus using GDN. Real users engaged in exploratory information seeking are simply better candidates to hear an advertising message than searchers who are actively screening content.

In embodiment illustrated in FIGURE 4, the entity influence system 206 includes one or more computing devices configured to provide an entity collection engine 410, a classification engine 412, a training engine 414, an influence determination engine 416, a graph generation engine 418, and a management interface engine 420. In general, the word "engine" as used herein refers to logic embodied in hardware or software instructions, which can be written in a programming language, such as C, C++, COBOL, JAVA™, PHP, Perl, HTML, CSS, JavaScript, VBScript, ASPX, Microsoft .NET™ languages such as C#, and/or the like. An engine may be compiled into executable programs or written in interpreted programming languages. Software engines may be callable from other engines or from themselves. Generally, the engines described herein refer to logical modules that can be merged with other engines, or can be divided into sub-engines. The engines can be stored in any type of computer-readable medium or computer storage device and be stored on and executed by one or more general purpose computing devices, thus creating a special purpose computing device configured to provide the engine.

In some embodiments, the entity collection engine 410 is configured to ingest entities from one or more networks and to add entities to an influence graph. In some embodiments, the entity collection engine 410 receives one or more URIs from an advertising exchange 204 in response to the advertising exchange 204 receiving a notification from an advertising publisher 202 that advertising impressions are available for purchase in association with the URI. The URI received by the entity collection engine 410 indicates a web page 404 that the entity collection engine 410 will add to the influence graph. In some embodiments, the entity collection engine 410 also collects entities from one or more social media providers 402 to add even further entities to the influence graph.

In some embodiments, the management interface engine 420 is configured to present an administration interface for use by an administrative user on an administrator computing device 428. In some embodiments, the management interface engine 420 may generate a web-based interface that is then presented to an administrator by a standard web browser on the administrator computing device 428. In some embodiments, the management interface engine 420 may expose an application programming interface (API) or other machine-accessible interface that allows stand-alone software operating on the administrator computing device 428 to provide access to administrative functions of the influence determination system 206 to an administrator. In some embodiments, the interface provided by the management interface engine 420 allows an administrator to alter configurations of the influence determination system 206, including but not limited to managing training examples used in classifier training as discussed further below.

The graph generation engine 418 is configured to analyze entities collected by the entity collection engine 410 to detect interactions with other entities. The graph generation engine 418 may then store representations of at least some of those interactions in the influence graph. In some embodiments, the training engine 414 is configured to process training examples identified by an administrator in order to produce classification models usable to assign contexts to entities. In some embodiments, the classification engine 412 is configured to apply the classification models to entities collected by the entity collection engine 410 to determine contexts associated with the entities. In some embodiments, the influence determination engine 416 is configured to process the influence graph generated by the graph generation engine 418 to determine an influence score for each entity in the influence graph. Each entity in the influence graph may be assigned a separate influence score by the influence determination engine 416 for each context the entity has been assigned by the classification engine 412. In some embodiments, the influence determination engine 416 and/or the classification engine 412 may assign context labels and/or context-sensitive influence scores to one or more entities based on context labels and/or context-sensitive influence scores of one or more neighboring entities in the influence graph. For example, if multiple web page entities are all labeled with a given context and all interact with a given Twitter account, then the given context may be applied to the given Twitter account even if those contexts are not assigned directly by the classification models to the Twitter account.

The advertiser interface engine 421 is configured to provide an interface for use by one or more advertisers via one or more advertiser computing devices 430. As with the management interface engine 420, the advertiser interface engine 421 may generate a web-based interface to be presented using a standard web browser, an API accessible by a stand-alone program executing on the advertiser computing device 430, or any other suitable form of interface that allows advertisers to submit requests for ad impressions as discussed further below.

Further description of the production of classification models, the application of classification models, the determination of influence scores, and the other actions performed by the components of the influence determination system 206 is provided below.

The illustrated embodiment of the entity influence system 208 also includes an example data store 422, a model data store 424, and a graph data store 426. As understood by one of ordinary skill in the art, a "data store" as described herein may be any suitable device configured to store data for access by a computing device. One example of a data store is a highly reliable, high-speed relational database management system (DBMS) executing on one or more computing devices and accessible over a high-speed packet switched network. However, any other suitable storage technique and/or device capable of quickly and reliably providing the stored data in response to queries may be used, and the computing device may be accessible locally instead of over a network, or may be accessible over some other type of suitable network or provided as a cloud-based service. A data store may also include data stored in an organized manner on a storage medium 808, as described further below. One of ordinary skill in the art will recognize that separate data stores described herein may be combined into a single data store, and/or a single data store described herein may be separated into multiple data stores, without departing from the scope of the present disclosure.

In some embodiments, the example data store 422 is configured to store example entities identified by an administrator as being associated with predetermined contexts. These example entities are then retrieved from the example data store 422 by the training engine 414 to create classification models for each context. In some embodiments, the model data store 424 is configured to store classification models generated by the training engine 414. The classification models are then retrieved and used by the classification engine 412 to assign context probabilities to entities. In some embodiments, the graph data store 426 stores a representation of one or more influence graphs, including at least a set of vertices and a set of edges. Each vertex represents an entity and includes a set of context probabilities indicating a likelihood that the entity is associated with a set of contexts. Each edge connects two vertices and represents an interaction between two entities. Further description of the functionality supported by the data stores 422, 424, 426 is provided below.

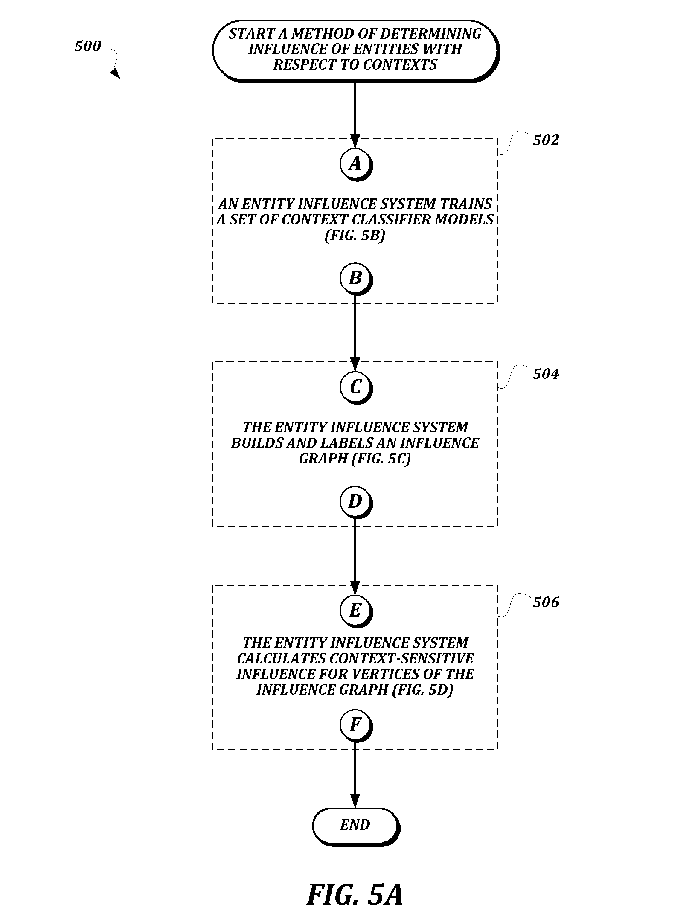

In block 302 of FIGURE 3, it is stated that the influence determination system 206 determines context-sensitive influence of a set of advertising publishers. While this was concisely stated within the description of method 300 for clarity, the actions performed by the influence determination system 206 to create the influence graph, label the entities with appropriate context probabilities, and determine context-sensitive probabilities are very complex. FIGURES 5A-5D are a flowchart that illustrates an exemplary embodiment of a method of determining influence of entities with respect to contexts according to various aspects of the present disclosure. The method 500 illustrated herein provides

From a start block, the method 500 proceeds to a set of method steps 502 defined between a start terminal ("terminal A") and an exit terminal ("terminal B"), wherein an entity influence system trains a set of context classifier models.

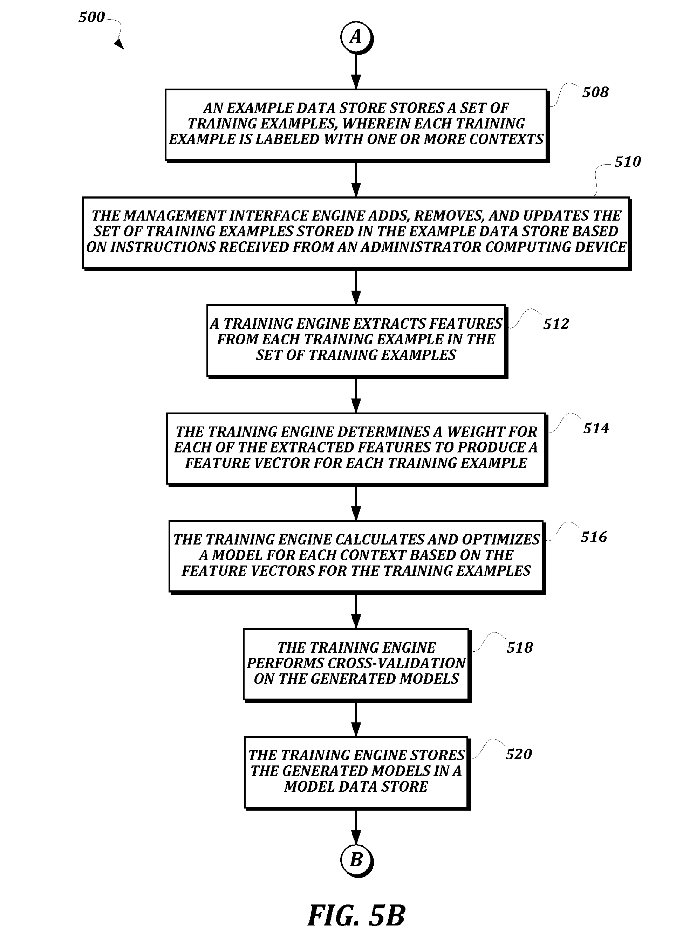

From terminal A (FIGURE 5B), the method 500 proceeds to block 508, where an example data store 422 stores a set of training examples, wherein each training example is labeled with one or more contexts. In some embodiments, the present disclosure uses a form of supervised learning, which is a process for inferring a generally applicable function (such as a classification function, a regression function, and/or the like) from a relatively limited set of human-labeled training data. In some embodiments, all of the training examples are provided by administrators, while in some embodiments, some or all of the training examples may be obtained from pre-existing data sets. For example, the Open Directory Project supplies a sizeable archive of pre-categorized web page content which could be used as training examples. As another example, weakly supervised techniques such as keyword searching using APIs provided by search engines such as Bing, Google, and/or the like could be used to identify training examples. As yet another example, training examples could be collected using crowd-sourcing techniques, using marketplaces such as Amazon's Mechanical Turk, distributing a browser plug-in, and/or the like.

In some embodiments, the administration interface generated by the management interface engine 420 allows an administrator to search for new training examples to be added to the example data store 422. As a non-limiting example, an operator may decide to add training examples for a context related to "pets." The operator may perform a web search to find pages that the operator believes should be assigned to the "pets" context. Once a page from the web search is identified by the operator as being appropriate for the "pets" context, the operator uses the administration interface to add the web page as a training example labeled with the "pets" context.

In some embodiments, the training example stored in the example data store 422 includes a representation of the web page that can be analyzed by the training engine 414, such as a copy of at least some of the text presented to the user when displaying the web page. In some embodiments, the training example may include information added by the administrator, such as a transcription of text present in the web page in graphical form, an indication of portions of the web page to ignore, and/or the like. In some embodiments, the search may be performed within the management interface, which may provide options for searching the web via a search engine API, and/or searching a sample of content classified by a classification model produced earlier, with options to filter the classified results by context and/or classification confidence.

At block 510, the management interface engine 420 adds, removes, and updates the set of training examples stored in the example data store 422 based on instructions received from an administrator computing device 428. As stated above, the administrator may use the administration interface to add new training examples. In some embodiments, the administration interface may also provide rich tools to allow the administrator to manage existing training examples already stored in the example data store 422. An audit view generated by the management interface engine 420 may allow administrators to browse stored training examples by context, either by sending the administrator to the web site associated with the training example, by presenting the information from the web site stored in the training example, by presenting a screenshot of the training example, and/or the like. The administrator may then be given the option to delete the training example or update one or more contexts associated with the training example.

The administration interface may also provide an analysis dashboard that allows administrators to browse samples of results generated by a classification model, at both the page level and the domain level. The analysis dashboard may allow the administrator to view test results (such as recall, precision, f-score, and confusion matrix results) for classifier models for individual contexts. This can reveal poorly performing classifiers that should have additional training examples added, and allows administrators to judge the value of adding new examples to existing contexts. The analysis dashboard may also allow administrators to identify new contexts by investigating clusters of features from low-confidence classifications. In some embodiments, a clustering technique such as Latent Dirichlet Allocation, bibliometric citation analysis, co-citation analysis, and/or the like may be used to cluster features from low-confidence classifications to help enable such analysis.

Once the set of training examples is established, the method 500 proceeds to block 512, where a training engine 414 extracts features from each training example in the set of training examples. The purpose of feature extraction is to extract the elements of the training example that have predictive value.

Features may be grouped into one or more namespaces. For example, in some embodiments, the features of a web page may be grouped into four namespaces: URL, Metadata, Link, and Text. The feature extraction process may vary by namespace. For the URL namespace, domains (including subdomains and top-level domains) and words in the path may be extracted using regular expressions. For the Metadata namespace, title, description, keyword, and other semantically defined metadata may be extracted using an HTML parser. For the Link namespace, "href" attributes of anchor tags may be extracted using an HTML parser. For the Text namespace, the main text content may be identified and extracted using a technique such as the Content Extraction with Tag Ratios (CETR) technique.

Separating features into multiple namespaces allows the training algorithm to differentiate between features based on how they are used in the content. For example, the presence of a word in the metadata may be a stronger indicator of a particular context than the presence of that same word in the main text. Further, separating features into multiple namespaces allows the training algorithm to perform different types of processing depending on the namespace.

In some embodiments, all namespaces may be represented as a bag-of-words (that is, unordered and ignoring grammar). In some embodiments, additional techniques may be applied to extract further meaning from the words in some namespaces, such as including n-grams, applying stemming, and identifying named entities. In some embodiments, filters to remove non-words and stop words may be applied to all of the namespaces except the URL namespace. In some embodiments, other tools may be used during feature extraction. For example, a tool such as BoilerPipe (provided by Kohlschütter Search Intelligence) may be used to extract the valuable text content from a document and discard clutter such as boilerplate and templates. As another example, a tool such as Jericho may be used to extract metadata from the document.

At block 514, the training engine 414 determines a weight for each of the extracted features to produce a feature vector for each training example. If all of the features in a namespace in a given embodiment are words, Term Frequency-Inverse Document Frequency (TF-IDF) is a suitable algorithm for assigning weights to features. TF-IDF produces a representation of how important a term is to a document (such as a training example or other entity). The importance increases proportional to the frequency of the term in the document, offset by the term's overall importance in the corpus. TF-IDF is the product of two statistics: normalized term frequency (TF) and inverse document frequency (IDF):

$$\text{TF-IDF} = \text{TF} \cdot \text{ID}$$

Normalized Term Frequency (TF): This is the raw frequency (RF) of the term (the number of times the term appears in the document), divided by the document length (DL). The frequency is normalized based on the document length to account for the fact that a term is likely to appear more often in longer documents.

$$\text{TF} = \frac{RF}{DL}$$

Inverse Document Frequency (IDF): This is calculated by dividing the total number of documents (N) by the number of documents containing the term (D) and then taking the natural log.

$$\text{IDF} = \ln\left(\frac{N}{D}\right)$$

Once the TF-IDF is calculated for each feature, the feature and TF-IDF weight are added to the feature vector for the document. The feature vector is an n-dimensional vector, with each dimension corresponding to a separate feature. The value of each dimension is the TF-IDF weight of the feature. In some embodiments, a sparse representation is used, meaning that only features with a weight above a predetermined threshold are included. In some embodiments, only features with weights that are above zero are included.

$$X = (x_1, x_2 \dots, x_n)$$

Next, at block 516, the training engine 414 calculates and optimizes a model for each context based on the feature vectors for the training examples. In some embodiments, the training engine 414 calculates a Logistic Regression model, which is a linear combination of the feature vector and a learned weight vector, transformed by the logistic function. The form of the logistic function is:

$$y = \frac{1}{1 + e^{-logit}}$$

The *logit* is defined as the dot product of the feature vector *X* and the weight vector *W,* for a final model of the form:

$$\hat{y} = \frac{1}{1 + e^{-(W^T x)}}$$

where $\hat{y}$ is interpreted as the probability of the context being applicable to the entity being classified. While a Logistic Regression model is described above, one of ordinary skill in the art will recognize that in some embodiments, other mathematical techniques may be used to generate classifier models based on the feature vectors for the training examples without departing from the scope of the present disclosure.

Once the model is calculated, the training engine 414 optimizes the model. That is, the training engine 414 searches for a weight vector *W* that minimizes the prediction error. In some embodiments, the process used for optimization is Stochastic Gradient Descent (SGD). In SGD, a sequence of iterations is performed. First, a training example is received from the example data store 422. Next, a prediction is made using a current weight vector *W*. The truth (or expected label) is observed, and finally, the weights are updated to reduce future error. Each weight in the weight vector *W* may be updated during each iteration *t* using the following update function:

$$w_{t+1} = w_t - \alpha \nabla \ell \, x$$

where:

$w_t$ is the current weight.
$w_{t+1}$ is the new weight.
x is the importance weight of the feature.
$\alpha$ is the per-feature learning rate, $\alpha = 1/\sqrt{t}$
$\nabla \ell$ is the gradient of the loss function.

Once the training engine 414 has optimized the model, the model is considered complete. The method 500 then proceeds to block 518, where the training engine 414 performs cross-validation on the generated models. In some embodiments, cross-validation is performed on a test set after every training run to check the accuracy of the generated model. The test set may be created by randomly selecting a set of training examples and using them as a test set instead using them to train the classifier model. For example, in some embodiments a random 20% of the training examples are identified before the training engine 414 begins generating the classifier model, and are reserved as a test set.

Various evaluation metrics may be used during cross-validation. In some embodiments, precision of the classifier model may be determined. Precision is an indication of the probability of relevant retrieval, and may be represented as:

$$Precision = tp/(tp + fp)$$

where *tp* is the number of true positives and *fp* is the number of false positives.

In some embodiments, recall may be determined. Recall is an indication of the probability of complete retrieval, and may be represented as:

$$Recall = tp/(tp + fn)$$

where *tp* is the number of true positives and *fn* is the number of false negatives.

In some embodiments, an F-Beta score may be determined, which is a weighted harmonic mean of precision and recall. A beta value of 0.5 is used to weight precision twice as important as recall, and may be represented as:

$$F_\beta = (1 + \beta^2) \cdot \frac{precision \cdot recall}{(\beta^2 \cdot precision) + recall}$$

At block 520, the training engine 414 stores the generated models in a model data store 424 for later use by other portions of the influence system 208. In some embodiments, the training engine 414 may only store a given model in the model data store 424 if the test results meet predetermined quality thresholds. The method 500 then proceeds to terminal B.

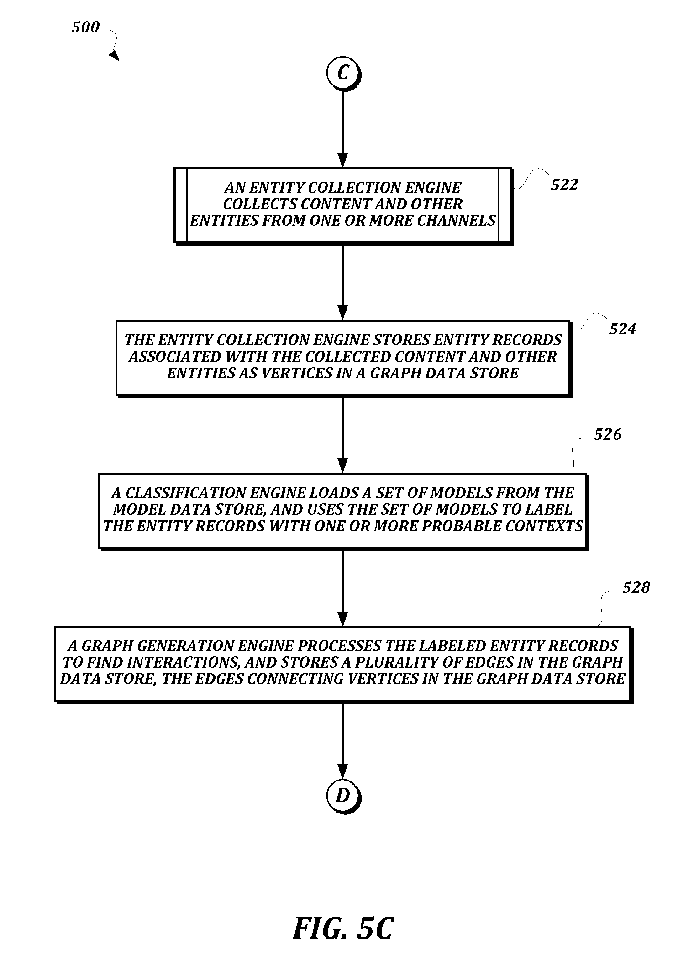

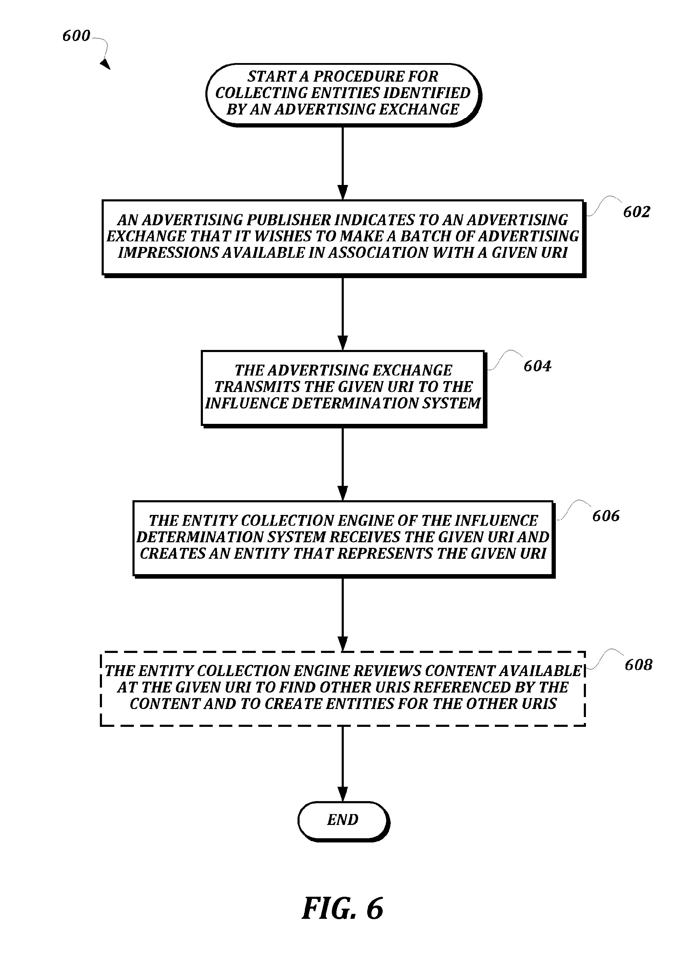

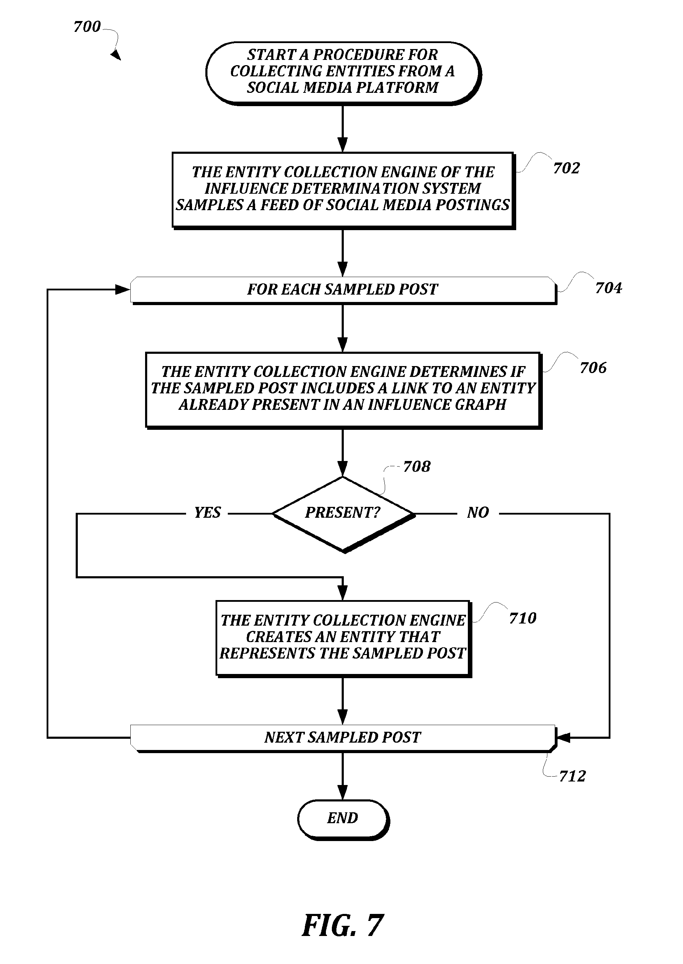

From terminal B (FIGURE 5A), the method 500 proceeds to a set of method steps 504 defined between a start terminal ("terminal C") and an exit terminal ("terminal D"), wherein the entity influence system builds and labels an influence graph. From terminal C (FIGURE 5C), the method 500 proceeds to procedure block 522, where an entity collection engine 410 collects content and other entities from one or more channels. Examples of procedures that the entity collection engine 410 may use to collect entities are illustrated in FIGURES 6 and 7 and described further below.

Next, at block 524, the entity collection engine 410 stores entity records associated with the collected content and other entities as vertices in a graph data store 426. In some embodiments, each entity record includes information usable to classify the entity. For example, the entity record may include one or more feature vectors extracted from the entity in a process similar to that discussed above with respect to the training examples in block 512. In some embodiments, the entity record may include a full copy of the entity for later feature extraction. In some embodiments, the entity record may also indicate a type of entity, such as a domain, a social media post, a web page, and/or the like.

At block 526, a classification engine 412 loads a set of classification models from the model data store 424, and uses the set of classification models to label the entity records with one or more probable contexts. In some embodiments, the prediction function used for classification is the same as the prediction function discussed above during training:

$$\hat{y} = \frac{1}{1 + e^{-(w^T x)}}$$

The classification engine 412 either transforms the entity into a feature vector, or obtains a previously generated feature vector representation of the entity from the entity record. The classification engine 412 then passes the feature vector through the prediction function / classification model for each context, producing a distribution of context probabilities. The classification engine 412 may then choose one or more of the highest probability contexts to assign to the entity.

In some embodiments, the classification engine 412 also applies a filter based on the notion of classification confidence before assigning the context to the entity. If the probability of the chosen context is less than a probability threshold x and the uncertainty of the context distribution is greater than an uncertainty threshold is greater than an uncertainty threshold $y$, then the classification is marked as low confidence and is ignored. In some embodiments, the uncertainty measure used is Shannon Entropy:

$$H(X) = -\sum_{i=1}^{n} x_i \ln(x_i)$$

where $x_i$ is the probability of the $i^{th}$ topic.

At block 528, a graph generation engine 418 processes the labeled entity records to find interactions, and stores a plurality of edges in the graph data store 426, the edges connecting vertices in the graph data store 426. In some embodiments, the graph generation engine 418 inspects each entity for links, and determines whether the links for an entity point to other entities associated with entity records in the graph data store 426. If a link does point to an entity associated with an entity record, the graph generation engine 418 creates an edge record in the graph data store 426 to represent the interaction between the entities. The edge record indicates the entity having the link as the source entity, and the entity that is linked to as the sink entity. One of ordinary skill in the art will recognize that the graph generation engine 418 may perform actions for finding interactions and storing edges in the graph data store 426 at other points during the method 500 instead of all at once. For example, the graph generation engine 418 may find interactions for each entity record contemporaneously with the creation of the entity record in the graph data store 426.

The method 500 then proceeds to terminal D. From terminal D (FIGURE 5A), the method 500 proceeds to a set of method steps 506 defined between a start terminal ("terminal E") and an exit terminal ("terminal F"), wherein the entity influence system calculates context-sensitive influence for vertices of the influence graph.

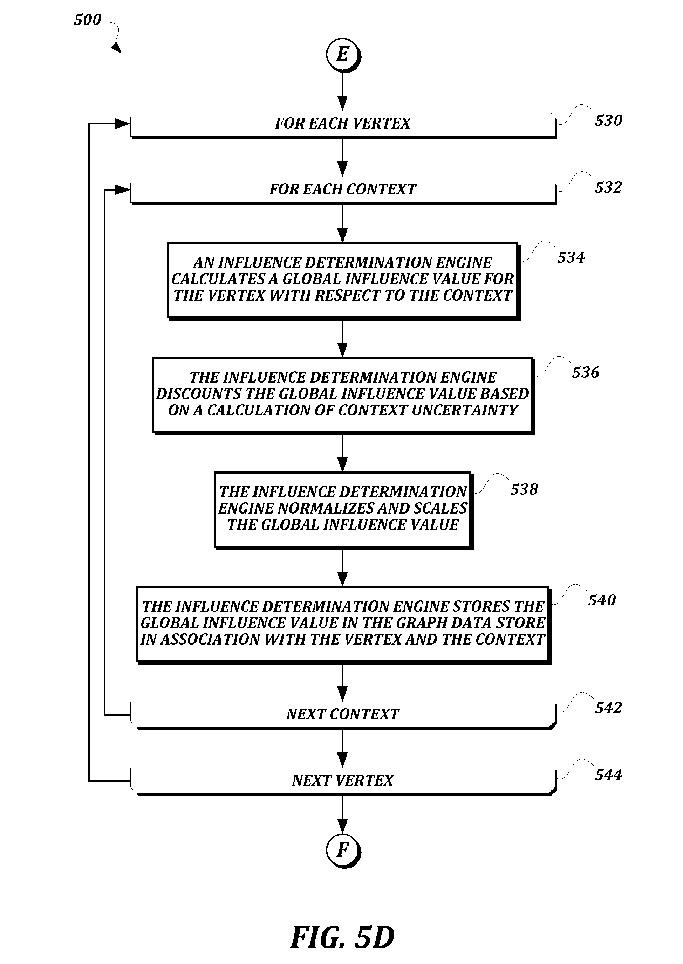

From terminal E (FIGURE 5D), the method 500 proceeds to a for loop start block 530. The for loop start block 530 indicates the beginning of a loop that is processed for each vertex in the influence graph. The first time the method 500 visits the for loop start block 530, the influence determination engine 416 may select a vertex at random as the vertex to be processed. The method 500 then proceeds to a for loop start block 532. The for loop start block 532 indicates the beginning of a loop that is processed for each context associated with the vertex. Overall, the two for loops illustrated in FIGURE 5D indicate that the set of method steps 506 ends up processing each vertex in the influence graph with respect to each context it has been tagged with. One of ordinary skill in the art will recognize that in some embodiments, the method 500 may process subsets of the entities and/or subsets of the contexts at a time without processing the whole influence graph.

From for loop start block 532, the method 500 proceeds to block 534, where the influence determination engine 416 calculates a global influence value for the vertex with respect to the context. In some embodiments, the influence determination engine 416 bases the global influence value on a variation of eigenvector centrality. Eigenvector centrality can be computed by solving for the steady state of the Markov chain whose state space is the set of vertices in a graph, given a transition matrix that represents the probability of transitioning between any two states. This is the rank vector $\pi$ that satisfies the equation $\pi P = \lambda\pi$, where $\lambda=1$ and P is the transition matrix. Traditional eigenvector centrality can be used to calculate global influence regardless of context. However, the influence graph tracked by the present disclosure is also annotated with context. Accordingly, the influence determination engine 416 determines the influence of an entity in the influence graph with respect to the context selected in for loop start block 532.

The context can be taken into account by building the transition matrix using rules such as the following:

    1. $d$ probability of randomly following an outgoing edge.
    2. 1-$d$ probability of teleporting to any vertex labeled with context c.
    3. 1.0 probability of teleporting to any vertex labeled with context c if there are no outgoing edges.

The rank vector can then be calculated deterministically, using $\pi P = \lambda\pi$, by solving a system of linear equations or using the power iteration method (repeatedly multiplying the rank vector by the transition matrix until convergence). However, as the size of the graph increases, deterministic calculation of the rank vector can take an unreasonable amount of time and computing power. Further, a deterministic calculation can be susceptible to manipulation through fraud.

Accordingly, instead of solving for the steady state of the Markov chain in order to calculate context-sensitive influence for the vertex, in some embodiments the influence determination engine 416 estimates the rank vector probabilistically by simulating the random walk implied by the transition matrix. This is a type of Monte Carlo method and provides a good estimate of global influence within relatively few iterations, thus saving considerable computation time and allowing the influence to be calculated in a reasonable amount of time over a very large graph. The simulated random walk also helps protect the influence calculation from being biased by fraudulent behavior.

In some embodiments, the influence determination engine 416 computes the context-sensitive rank vector for the context c at the vertex being processed as follows:

    1. Start $m$ random walks at the vertex.
    2. For each iteration i:

        a. If there are no outgoing edges then the walk terminates.
        b. Otherwise, the walk follows an outgoing edge from the vertex with probability $d$ and terminates with probability 1-$d$.

The term $d$ is a damping factor. In one embodiment, a damping factor $d$ of 0.85 is used, along with an $m$ of 100 and an $i$ of 10. Visits are weighted using the context weight of the vertex that initiated the walk. The influence score for the vertex is the sum of the walk visits.

At block 536, the influence determination engine 416 discounts the global influence value based on a calculation of context uncertainty. If the raw influence score calculated at block 534 is used, it may be misleading because some entities may be broadly influential and may distort the results. Therefore, in some embodiments, a notion of context uncertainty is used to discount the raw influence score. In some embodiments, the Shannon Entropy of an entity's influence distribution $X$ may be calculated using the following formula:

$$H(X) = -\sum_{i=1}^{n} x_i \ln(x_i)$$

where $x_i$ is the influence score for the i-th context.

The raw influence score, even if discounted based on context uncertainty, may be difficult to use. The raw influence score is based on a sum of visits from walks, and so will change if the number of walks is increased or decreased. Therefore, at block 538, the influence determination engine 416 normalizes and scales the global influence value within each context and entity-type combination. The raw influence score may be scaled to a human-consumable representation using any suitable scaling technique, such as logarithmic scaling, linear coefficients, cumulative probability density functions, and/or the like. In an embodiment that uses a logarithmic scaling technique, the final score may be an integer with a range between 0 and 100, wherein each increase of 10 represents an e increase in raw influence.

At block 540, the influence determination engine 416 stores the discounted, normalized, and scaled global influence value in the graph data store 426 in association with the vertex and the context. From block 540, the method 500 proceeds to a for loop end block 542. At the for loop end block 542, if there are further contexts to be processed for the current vertex, the method 500 returns to the for loop start block 532. Otherwise, if there are no further contexts to be processed for the current vertex, the method 500 proceeds to for loop end block 544.

At the for loop end block 544, if there are further vertices to be processed in the influence graph, the method 500 returns to the for loop start block 530, and the next vertex is randomly chosen. Otherwise, if there are no further vertices to be processed in the influence graph, the method 500 proceeds to terminal F.

From terminal F (FIGURE 5A), the method 500 proceeds to an end block and terminates. The influence graph created by the method 500 can then be used by the influence determination system 206 to help advertisers 208 purchase valuable advertising impressions via the advertising exchange 204.

Though illustrated as a single pass, in some embodiments, the set of method steps 502 for training the set of context classifier models and/or the set of method steps 504 for building and labeling the influence graph may be performed repeatedly. For example, a classifier model for a given context may be retrained each time the set of training examples is updated by an administrator. As another example, the vertices and edges of the influence graph may be constantly updated as the entity collection engine 410 obtains new entities. The influence values calculated by the set of method steps 506 then may be updated on a periodic basis, such as hourly, daily, and/or on any other suitable schedule.

Monte Carlo methods such as those described above for calculating the global influence value are easy to parallelize. Accordingly, in some embodiments, the influence determination engine 416 may be optimized further than the simple for loops described above. In some embodiments, the influence determination engine 416 may be optimized to concurrently calculate rank vectors for all contexts. Instead of starting $m$ walks at each vertex for each context c, the influence determination engine 416 may start $m$ walks at each vertex and store the context weights of the starting vertex in a data structure associated with the walk. When the walk visits a vertex, it updates a counter on the visited vertex for each of the walk's contexts. This increases the data associated with each walk, but decreases the total number of walks. In some embodiments, the influence determination engine 416 may be optimized to stagger walk starts. Instead of starting all of the walks on the first iteration, the walk starts may be distributed over the first $n$ iterations. Since walks have a 1-$d$ probability of terminating at each iteration, this reduces the maximum work done at any iteration, thereby increasing scalability at a minimal cost to accuracy.

Other variations may also be used to improve the accuracy of the influence score. In some embodiments, age-weighted edges may be used. The importance of some interactions in the influence graph (particularly social interactions such as tweets and retweets) naturally decays with time. Therefore, the age of the interaction may be stored along with at least some of the edge records in the graph data store 426. Then, when the random walk is occurring, the probability of a random walk following an outgoing edge could be multiplied by $1/t^{0.5}$, where t is the length of time (such as the number of days) since the interaction. In some embodiments, context-weighted edges may be used. Intuitively, a person will tend to follow links that are similar to their interests. This can be modeled by weighting edges according to the context similarity of the source and sink vertices. For example, a random walk used to calculate influence with respect to a "sports" context would tend to follow links to pages that were also classified with the "sports" context.

FIGURE 6 is a flowchart that illustrates an exemplary embodiment of a procedure 600 for collecting entities identified by an advertising exchange 204 according to various aspects of the present disclosure. From a start block, the procedure 600 proceeds to block 602, where an advertising publisher 202 indicates to an advertising exchange 204 that it wishes to make a batch of advertising impressions available in association with a given URI. The URI may indicate, for example, a web page that has an area for displaying advertisements, where the web page owner wishes to be provided with advertisements for display by the advertising exchange 204. Next, at block 604, the advertising exchange 204 transmits the given URI to the influence determination system 206.

At block 606, the entity collection engine 410 of the influence determination system 206 receives the given URI and creates an entity that represents the given URI. In some embodiments, the entity collection engine 410 may create more than one entity for a given URI. For example, the entity collection engine 410 may create an entity for the web page indicated by the given URI, and may create additional entities based on the web page, such as an entity for the domain hosting the URI, an entity for a social media account or posting referenced by the web page, and/or the like.

In some embodiments, the procedure 600 proceeds to optional block 608, where the entity collection engine 410 reviews content available at the given URI to find other URIs referenced by the content and to create entities for the other URIs. This may be desirable in order to increase the size of the influence graph without randomly spidering content that may be less related to entities using the advertising exchange 204 to obtain display advertising. In embodiments where such additional entities are not desired, the steps in optional block 608 may be omitted. The procedure 600 then proceeds to an end block and terminates.

FIGURE 7 is a flowchart that illustrates an exemplary embodiment of a procedure 700 for collecting entities from a social media platform according to various aspects of the present disclosure. From a start block, the procedure 700 proceeds to block 702, where the entity collection engine 410 of the influence determination system 206 samples a feed of social media postings. While some embodiments, for some social media platforms, may attempt to process all postings to a social media platform, the scope of such a task may be too vast for efficient processing. Accordingly, the illustrated embodiment randomly samples a social media feed. For example, in one embodiment, the entity collection engine 410 may sample random posts from the Twitter retweet feed.

The procedure 700 then proceeds to a for loop start block 704. The for loop start block 704 indicates the start of a loop that processes a given sampled post. From the for loop start block 704, the procedure 700 advances to block 706, where the entity collection engine 410 determines if the sampled post includes a link to an entity already present in an influence graph. For example, the sampled post may include a link to a web page for which an entity has already been created in the influence graph. As another example, the sampled post may include a link to another social media post for which an entity has already been created in the influence graph.

At decision block 708, a test is performed based on the determination of block 706. If it was determined that there was no link to an entity already present in the influence graph in the sampled post, then the result of the test at decision block 708 is NO, and the procedure 700 advances to a for loop end block 712. If it was determined that there was a link to an existing entity in the influence graph, then the result of the test at decision block 708 is YES, and the procedure 700 advances to block 710. At block 710, the entity collection engine 410 creates an entity that represents the sampled post. As with web pages, the entity collection engine 410 may also create additional entities based on the sampled post, such as an entity representing the social media account that created the sampled post, an entity representing a hashtag included in the sampled post, and/or the like. The procedure 700 then proceeds to the for loop end block 712. From the for loop end block 712, if there are more sampled posts to process, the procedure 700 returns to the for loop start block 704 and processes the next sampled post. Otherwise, if there are no more sampled posts to process, the procedure 700 advances to an end block and terminates.

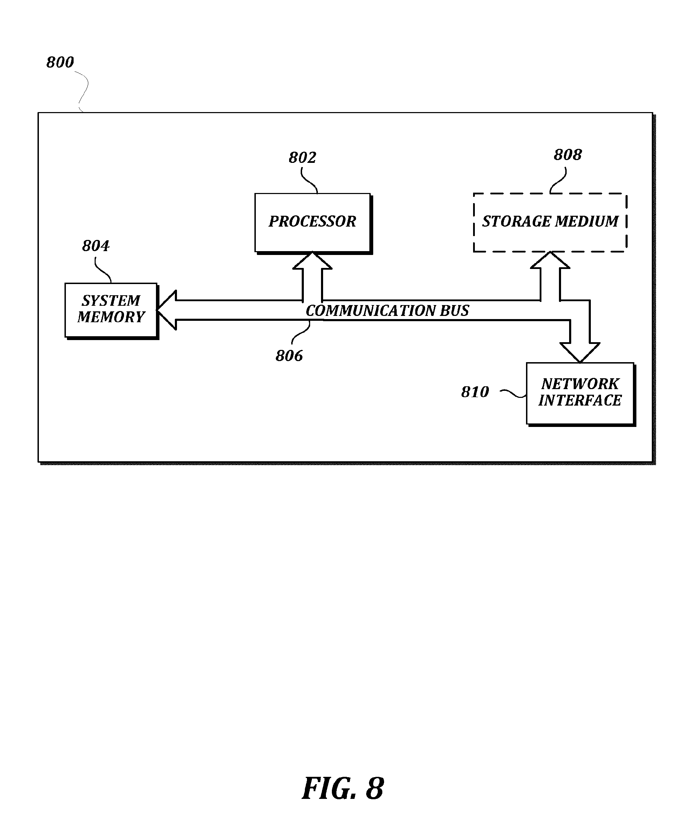

FIGURE 8 is a block diagram that illustrates aspects of an exemplary computing device 800 appropriate for use with embodiments of the present disclosure. While FIGURE 8 is described with reference to a computing device that is implemented as a device on a network, the description below is applicable to servers, personal computers, mobile phones, smart phones, tablet computers, embedded computing devices, and other devices that may be used to implement portions of embodiments of the present disclosure. Moreover, those of ordinary skill in the art and others will recognize that the computing device 800 may be any one of any number of currently available or yet to be developed devices.

In its most basic configuration, the computing device 800 includes at least one processor 802 and a system memory 804 connected by a communication bus 806. Depending on the exact configuration and type of device, the system memory 804 may be volatile or nonvolatile memory, such as read only memory ("ROM"), random access memory ("RAM"), EEPROM, flash memory, or similar memory technology. Those of ordinary skill in the art and others will recognize that system memory 804 typically stores data and/or program modules that are immediately accessible to and/or currently being operated on by the processor 802. In this regard, the processor 802 may serve as a computational center of the computing device 800 by supporting the execution of instructions.

As further illustrated in FIGURE 8, the computing device 800 may include a network interface 810 comprising one or more components for communicating with other devices over a network. Embodiments of the present disclosure may access basic services that utilize the network interface 810 to perform communications using common network protocols. The network interface 810 may also include a wireless network interface configured to communicate via one or more wireless communication protocols, such as WiFi, 2G, 3G, LTE, WiMAX, Bluetooth, and/or the like.

In the exemplary embodiment depicted in FIGURE 8, the computing device 800 also includes a storage medium 808. However, services may be accessed using a computing device that does not include means for persisting data to a local storage medium. Therefore, the storage medium 808 depicted in FIGURE 8 is represented with a dashed line to indicate that the storage medium 808 is optional. In any event, the storage medium 808 may be volatile or nonvolatile, removable or nonremovable, implemented using any technology capable of storing information such as, but not limited to, a hard drive, solid state drive, CD ROM, DVD, or other disk storage, magnetic cassettes, magnetic tape, magnetic disk storage, and/or the like.

As used herein, the term "computer-readable medium" includes volatile and non-volatile and removable and non-removable media implemented in any method or technology capable of storing information, such as computer readable instructions, data structures, program modules, or other data. In this regard, the system memory 804 and storage medium 808 depicted in FIGURE 8 are merely examples of computer-readable media.

Suitable implementations of computing devices that include a processor 802, system memory 804, communication bus 806, storage medium 808, and network interface 810 are known and commercially available. For ease of illustration and because it is not important for an understanding of the claimed subject matter, FIGURE 8 does not show some of the typical components of many computing devices. In this regard, the computing device 800 may include input devices, such as a keyboard, keypad, mouse, microphone, touch input device, touch screen, tablet, and/or the like. Such input devices may be coupled to the computing device 800 by wired or wireless connections including RF, infrared, serial, parallel, Bluetooth, USB, or other suitable connections protocols using wireless or physical connections. Similarly, the computing device 800 may also include output devices such as a display, speakers, printer, etc. Since these devices are well known in the art, they are not illustrated or described further herein.

As will be appreciated by one skilled in the art, the specific routines described above in the flowcharts may represent one or more of any number of processing strategies such as event-driven, interrupt-driven, multi-tasking, multi-threading, and the like. As such, various acts or functions illustrated may be performed in the sequence illustrated, in parallel, or in some cases omitted. Likewise, the order of processing is not necessarily required to achieve the features and advantages, but is provided for ease of illustration and description. Although not explicitly illustrated, one or more of the illustrated acts or functions may be repeatedly performed depending on the particular strategy being used. Further, these FIGURES may graphically represent code to be programmed into a computer readable storage medium associated with a computing device.

While illustrative embodiments have been illustrated and described, it will be appreciated that various changes can be made therein without departing from the spirit and scope of the invention.

EXAMPLES

Example embodiments of the invention are defined as follows:

1. A method for identifying contexts associated with entities using a supervised learning process, the method comprising:

storing, by at least one computing device, training examples, wherein each training example includes one or more contexts assigned to an entity;
presenting, by at least one computing device, an interface for managing the supervised learning process;
building, by at least one computing device, one or more classification models based on training examples stored in the example data store; and
identifying, by at least one computing device, contexts associated with entities using the one or more classification models built by the training engine.

2. The method of Example 1, wherein presenting an interface for managing the supervised learning process includes:

presenting training examples of annotated entities organized by context; and
receiving an instruction to delete a presented training example or to assign a training example to a different context.

3. The method of any of Examples 1-2, wherein presenting an interface for managing the supervised learning process includes presenting a search interface that allows new training examples for a given context to be found using keyword-based web search queries.

4. The method of any of Examples 1-3, wherein presenting an interface for managing the supervised learning process includes presenting a search interface that allows new training examples to be found using keyword-based search queries of entities annotated with contexts by a classification model.

5. The method of Example 4, wherein the search interface includes options to filter by one or more of a given context and a classification confidence.

6. The method of any of Examples 1-5, wherein presenting an interface for managing the supervised learning process includes presenting a feedback interface that includes one or more of:

a browse interface for browsing samples of classifications produced by a classification model;
a test result interface for viewing test results for individual contexts, wherein the test results may include one or more of recall, precision, f-score, and a confusion matrix; and
a context discovery interface configured to present clusters of features from low-confidence classifications.

7. A computer-implemented method of predicting contexts associated with entities, the method comprising:

applying, by a computing device, a plurality of classification models to an entity, wherein each classification model of the plurality of classification models is associated with a separate context, and wherein the output of each classification model is a context probability indicating a probability that the entity is associated with the context of the classification model;
choosing, by a computing device, a context associated with a highest context probability;
storing, by a computing device, a context label associated with the entity, wherein the context label identifies the context associated with the highest context probability and includes the context probability of the context; and
in response to determining that the context probability of the context is less than a probability threshold and that uncertainty of a context distribution is greater than an uncertainty threshold, storing, by a computing device, an indication in the context label that the classification is a low confidence classification.

8. The computer-implemented method of Example 7, wherein the uncertainty of the context distribution is determined by calculating a Shannon Entropy of a probability distribution of determined probabilities for each of the plurality of classification models.

9. A method of determining influence of an entity, the method comprising:

generating, by one or more computing devices, an interaction graph, wherein vertices in the graph represent entities, wherein the vertices include weighted attributes indicating associated contexts, and wherein directed edges in the graph represent interactions between entities; and
calculating, by one or more computing devices, Eigenvector centrality for the graph to determine influence scores for each vertex.

10. The method of Example 9, wherein calculating Eigenvector centrality includes performing a Monte Carlo method to probabilistically estimate a rank vector.

11. The method of Example 10, wherein performing the Monte Carlo method includes optimizing the Monte Carlo method by staggering walk starts.

12. The method of Example 10, wherein performing the Monte Carlo method includes optimizing the Monte Carlo method by parallelizing calculation of each context rank vector.

13. The method of any of Examples 9-12, wherein edges of the graph are weighted based on an age of the interaction.

14. The method of any of Examples 9-13, wherein edges of the graph are weighted based on context similarity of the sink vertex.

15. The method of any of Examples 9-14, wherein the computer-readable instructions further cause the one or more computing devices to discount an influence of an entity associated with a vertex based on a Shannon Entropy of the entity's influence distribution for a plurality of contexts associated with the entity.

16. The method of any of Examples 9-15, wherein the computer-readable instructions further cause the one or more computing devices to scale influence scores to form a human-consumable representation of influence using a logistical function, a linear function, or a cumulative probability density function.

17. A system comprising one or more computing devices configured to perform a method as recited in any of Examples 1-16.

18. A computer-readable medium having computer-executable instructions stored thereon that, in response to execution by one or more processors of one or more computing devices, cause the one or more computing devices to perform a method as recited in any of Examples 1-16.

**Claims**

1. A system (206) for identifying contexts associated with entities using a supervised learning process, the system comprising at least one computing device configured to provide:

   an example data store (422) configured to store training examples, wherein each training example includes one or more contexts assigned to an entity;
   a management interface engine (420) configured to present an interface for managing the supervised learning process;
   a training engine (414) configured to build one or more classification models based on training examples stored in the example data store; and
   a classification engine (412) configured to identify contexts associated with entities using the one or more classification models built by the training engine.

2. The system of Claim 1, wherein presenting an interface for managing the supervised learning process includes:

   presenting training examples of annotated entities organized by context; and
   receiving an instruction to delete a presented training example or to assign a training example to a different context.

3. The system of any of Claims 1-2, wherein presenting an interface for managing the supervised learning process includes presenting a search interface that allows new training examples for a given context to be found using keyword-based web search queries.

4. The system of any of Claims 1-3, wherein presenting an interface for managing the supervised learning process includes presenting a search interface that allows new training examples to be found using keyword-based search queries of entities annotated with contexts by a classification model.

5. The system of Claim 4, wherein the search interface includes options to filter by one or more of a given context and a classification confidence.

6. The system of any of Claims 1-5, wherein presenting an interface for managing the supervised learning process includes presenting a feedback interface that includes one or more of:

   a browse interface for browsing samples of classifications produced by a classification model;
   a test result interface for viewing test results for individual contexts, wherein the test results may include one or more of recall, precision, f-score, and a confusion matrix; and
   a context discovery interface configured to present clusters of features from low-confidence classifications.

7. The system of any of Claims 1-6, wherein identifying contexts associated with entities using the one or more classification models built by the training engine includes:

   applying a plurality of classification models to an entity, wherein each classification model of the plurality of classification models is associated with a separate context, and wherein the output of each classification model is a context probability indicating a probability that the entity is associated with the context of the classification model;
   choosing a context associated with a highest context probability;
   storing a context label associated with the entity, wherein the context label identifies the context associated with the highest context probability and includes the context probability of the context; and
   in response to determining that the context probability of the context is less than a probability threshold and that uncertainty of a context distribution is greater than an uncertainty threshold, storing an indication in the context label that the classification is a low confidence classification.

8. The system of Claim 7, wherein the uncertainty of the context distribution is determined by calculating a Shannon Entropy of a probability distribution of determined probabilities for each of the plurality of classification models.

9. The system of any of Claims 1-8, wherein the at least one computing device is further configured to provide:

a graph generation engine (418) configured to generate an interaction graph, wherein vertices in the graph represent entities, wherein the vertices include weighted attributes indicating associated contexts, and wherein directed edges in the graph represent interactions between entities; and
an influence determination engine (416) configured to determine influence of an entity by:

calculating, by the one or more computing devices, Eigenvector centrality for the graph to determine influence scores for each vertex.

10. The system of Claim 9, wherein calculating Eigenvector centrality includes performing a Monte Carlo method to probabilistically estimate a rank vector.

11. The system of Claim 10, wherein performing the Monte Carlo method includes optimizing the Monte Carlo method by staggering walk starts.

12. The system of Claim 10, wherein performing the Monte Carlo method includes optimizing the Monte Carlo method by parallelizing calculation of each context rank vector.

13. The system of any of Claims 9-12, wherein edges of the graph are weighted based on an age of the interaction or context similarity of the sink vertex.

14. The system of any of Claims 9-13, wherein the influence determination engine is further configured to discount an influence of an entity associated with a vertex based on a Shannon Entropy of the entity's influence distribution for a plurality of contexts associated with the entity.

15. The system of any of Claims 9-14, wherein the influence determination engine is further configured to scale influence scores to form a human-consumable representation of influence using a logistical function, a linear function, or a cumulative probability density function.

**FIG. 1**

200

**ADVERTISING PUBLISHER(S)** — 202

**ADVERTISING EXCHANGE** — 204

**ENTITY INFLUENCE SYSTEM** — 206

**ADVERTISER** — 208

*FIG. 2*

*300*

START A METHOD OF PROVIDING
VALUABLE ADVERTISING
PLACEMENTS TO ADVERTISERS

*302*

AN INFLUENCE DETERMINATION SYSTEM DETERMINES CONTEXT-
SENSITIVE INFLUENCE OF A SET OF ADVERTISING PUBLISHERS THAT
MAKE ADVERTISING IMPRESSIONS AVAILABLE FOR PURCHASE

*304*

AN ADVERTISER SUBMITS A REQUEST FOR ADVERTISING IMPRESSIONS
TO THE INFLUENCE DETERMINATION SYSTEM, THE REQUEST
INCLUDING A DESIRED CONTEXT AND/OR AN INFLUENCE THRESHOLD

*306*

THE INFLUENCE DETERMINATION SYSTEM SUBMITS A BID TO AN ADVERTISING
EXCHANGE FOR AD IMPRESSIONS MADE AVAILABLE BY PUBLISHERS DETERMINED
BY THE INFLUENCE DETERMINATION SYSTEM AS MATCHING THE REQUEST

*308*

THE ADVERTISING EXCHANGE MATCHES THE BID TO AN OFFER OF AD
IMPRESSIONS FROM AN ADVERTISING PUBLISHER, AND THE ADVERTISING
PUBLISHER PROVIDES THE AD IMPRESSIONS TO THE ADVERTISER

END

*FIG. 3*

**FIG. 4**

*500*

**START A METHOD OF DETERMINING INFLUENCE OF ENTITIES WITH RESPECT TO CONTEXTS**

(A)

**AN ENTITY INFLUENCE SYSTEM TRAINS A SET OF CONTEXT CLASSIFIER MODELS (FIG. 5B)**

(B)

*502*

(C)

**THE ENTITY INFLUENCE SYSTEM BUILDS AND LABELS AN INFLUENCE GRAPH (FIG. 5C)**

(D)

*504*

(E)

**THE ENTITY INFLUENCE SYSTEM CALCULATES CONTEXT-SENSITIVE INFLUENCE FOR VERTICES OF THE INFLUENCE GRAPH (FIG. 5D)**

(F)

*506*

**END**

## FIG. 5A

500

(A)

AN EXAMPLE DATA STORE STORES A SET OF TRAINING EXAMPLES, WHEREIN EACH TRAINING EXAMPLE IS LABELED WITH ONE OR MORE CONTEXTS — 508

THE MANAGEMENT INTERFACE ENGINE ADDS, REMOVES, AND UPDATES THE SET OF TRAINING EXAMPLES STORED IN THE EXAMPLE DATA STORE BASED ON INSTRUCTIONS RECEIVED FROM AN ADMINISTRATOR COMPUTING DEVICE — 510

A TRAINING ENGINE EXTRACTS FEATURES FROM EACH TRAINING EXAMPLE IN THE SET OF TRAINING EXAMPLES — 512

THE TRAINING ENGINE DETERMINES A WEIGHT FOR EACH OF THE EXTRACTED FEATURES TO PRODUCE A FEATURE VECTOR FOR EACH TRAINING EXAMPLE — 514

THE TRAINING ENGINE CALCULATES AND OPTIMIZES A MODEL FOR EACH CONTEXT BASED ON THE FEATURE VECTORS FOR THE TRAINING EXAMPLES — 516

THE TRAINING ENGINE PERFORMS CROSS-VALIDATION ON THE GENERATED MODELS — 518

THE TRAINING ENGINE STORES THE GENERATED MODELS IN A MODEL DATA STORE — 520

(B)

**FIG. 5B**

500

**C**

AN ENTITY COLLECTION ENGINE COLLECTS CONTENT AND OTHER ENTITIES FROM ONE OR MORE CHANNELS — 522

THE ENTITY COLLECTION ENGINE STORES ENTITY RECORDS ASSOCIATED WITH THE COLLECTED CONTENT AND OTHER ENTITIES AS VERTICES IN A GRAPH DATA STORE — 524

A CLASSIFICATION ENGINE LOADS A SET OF MODELS FROM THE MODEL DATA STORE, AND USES THE SET OF MODELS TO LABEL THE ENTITY RECORDS WITH ONE OR MORE PROBABLE CONTEXTS — 526

A GRAPH GENERATION ENGINE PROCESSES THE LABELED ENTITY RECORDS TO FIND INTERACTIONS, AND STORES A PLURALITY OF EDGES IN THE GRAPH DATA STORE, THE EDGES CONNECTING VERTICES IN THE GRAPH DATA STORE — 528

**D**

## FIG. 5C

500

E

FOR EACH VERTEX — 530

FOR EACH CONTEXT — 532

AN INFLUENCE DETERMINATION ENGINE
CALCULATES A GLOBAL INFLUENCE VALUE FOR
THE VERTEX WITH RESPECT TO THE CONTEXT — 534

THE INFLUENCE DETERMINATION ENGINE
DISCOUNTS THE GLOBAL INFLUENCE VALUE BASED
ON A CALCULATION OF CONTEXT UNCERTAINTY — 536

THE INFLUENCE DETERMINATION
ENGINE NORMALIZES AND SCALES
THE GLOBAL INFLUENCE VALUE — 538

THE INFLUENCE DETERMINATION ENGINE STORES THE
GLOBAL INFLUENCE VALUE IN THE GRAPH DATA STORE
IN ASSOCIATION WITH THE VERTEX AND THE CONTEXT — 540

NEXT CONTEXT — 542

NEXT VERTEX — 544

F

**FIG. 5D**

600

START A PROCEDURE FOR
COLLECTING ENTITIES IDENTIFIED
BY AN ADVERTISING EXCHANGE

AN ADVERTISING PUBLISHER INDICATES TO AN ADVERTISING
EXCHANGE THAT IT WISHES TO MAKE A BATCH OF ADVERTISING
IMPRESSIONS AVAILABLE IN ASSOCIATION WITH A GIVEN URI

602

THE ADVERTISING EXCHANGE
TRANSMITS THE GIVEN URI TO THE
INFLUENCE DETERMINATION SYSTEM

604

THE ENTITY COLLECTION ENGINE OF THE INFLUENCE
DETERMINATION SYSTEM RECEIVES THE GIVEN URI AND
CREATES AN ENTITY THAT REPRESENTS THE GIVEN URI

606

THE ENTITY COLLECTION ENGINE REVIEWS CONTENT AVAILABLE
AT THE GIVEN URI TO FIND OTHER URIS REFERENCED BY THE
CONTENT AND TO CREATE ENTITIES FOR THE OTHER URIS

608

END

FIG. 6

700

START A PROCEDURE FOR
COLLECTING ENTITIES FROM A
SOCIAL MEDIA PLATFORM

THE ENTITY COLLECTION ENGINE OF THE
INFLUENCE DETERMINATION SYSTEM
SAMPLES A FEED OF SOCIAL MEDIA POSTINGS
702

FOR EACH SAMPLED POST
704

THE ENTITY COLLECTION ENGINE DETERMINES IF
THE SAMPLED POST INCLUDES A LINK TO AN ENTITY
ALREADY PRESENT IN AN INFLUENCE GRAPH
706

708

YES ——— PRESENT? ——— NO

THE ENTITY COLLECTION ENGINE
CREATES AN ENTITY THAT
REPRESENTS THE SAMPLED POST
710

NEXT SAMPLED POST
712

END

FIG. 7

*800*

*802*                          *808*

PROCESSOR             STORAGE MEDIUM

*804*

SYSTEM MEMORY

COMMUNICATION BUS

*806*

*810*     NETWORK INTERFACE

## FIG. 8

Europäisches
Patentamt

European
Patent Office

Office européen
des brevets

## EUROPEAN SEARCH REPORT

Application Number

EP 14 17 7806

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | "STATEMENT IN ACCORDANCE WITH THE NOTICE FROM THE EUROPEAN PATENT OFFICE DATED 1 OCTOBER 2007 CONCERNING BUSINESS METHODS - EPC / ERKLAERUNG GEMAESS DER MITTEILUNG DES EUROPAEISCHEN PATENTAMTS VOM 1.OKTOBER 2007 UEBER GESCHAEFTSMETHODEN - EPU / DECLARATION CONFORMEMENT AU COMMUNIQUE DE L'OFFICE EUROP", 20071101, 1 November 2007 (2007-11-01), XP002456252, * Statement in accordance with the Notice from the European Patent Office dated 1 October 2007 concerning business methods(OJ 11/2007; p592-593) The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. *<br>----- | 1-15 | INV.<br>G06Q30/02<br><br><br>TECHNICAL FIELDS<br>SEARCHED (IPC)<br><br>G06Q |

The present search report has been drawn up for all claims

| Place of search | Date of completion of the search | Examiner |
|---|---|---|
| The Hague | 19 November 2014 | Fernández Ferreira |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

**EP 2 827 294 A1**

**Patent documents cited in the description**

- US 61856556 B

- US 61973168 B